# FASCICULE DE BREVET EUROPEEN

(11) **EP 4 241 568 B1**
(45) Date de publication et mention de la délivrance du brevet: **14.10.2026**
(21) Numéro de dépôt: 23160904.1
(22) Date de dépôt: 09.03.2023
(51) Int. Cl.: A23C 9/144, A23C 9/146, A23C 21/06, A23J 1/20, A23L 33/00

(54) **PROCEDE DE DEMINERALISATION D'UNE COMPOSITION PROTEIQUE LAITIERE A BASE DE LACTOSERUM DE PETIT RUMINANT**
VERFAHREN ZUR DEMINERALISIERUNG EINER MILCHEIWEISSZUSAMMENSETZUNG AUF BASIS VON MOLKE AUS KLEINEN WIEDERKÄUERN
METHOD FOR DEMINERALIZING A WHEY PROTEIN WHEY COMPOSITION OF A SMALL RUMINANT

(30) Priorité: 09.03.2022 FR 2202050
(43) Date de publication de la demande: 13.09.2023
(73) Titulaire: Euroserum, 70170 Port Sur Saone (FR)
(72) Inventeur: FEYFANT, Marie, 70000 Vellefaux (FR); LECOLLIER, Audrey, 92130 Issy les Moulineaux (FR); GALMICHE, Laura, 21310 Mirebeau sur Bèze (FR); BALLEVRE, Stéphane, 70000 Echenoz-la-Méline (FR)
(74) Mandataire: Delaveau, Sophie

(56) Documents cités:
- EP-A1- 0 153 967
- CN-A- 106 615 147
- DE-T2- 69 729 619
- VALVERDE J L ET AL: "Minimizing the environmental impact of the regeneration process of an ion exchange bed charged with transition metals", SEPARATION AND PURIFICATION TECHNOLOGY, ELSEVIER SCIENCE, AMSTERDAM, NL, vol. 49, no. 2, 15 April 2006 (2006-04-15), pages 167 - 173, XP028035319, ISSN: 1383-5866, [retrieved on 20060415], DOI: 10.1016/J.SEPPUR.2005.09.009

## Description

### DOMAINE TECHNIQUE DE L'INVENTION

L'invention porte principalement sur un procédé de déminéralisation d'une composition laitière à base de lactosérum de petit ruminant.

Le présent exposé porte également sur l'utilisation de la composition déminéralisée comme ingrédient dans le domaine de l'alimentation infantile.

### ARRIERE-PLAN TECHNOLOGIQUE DE L'INVENTION

Le lactosérum est un coproduit de la production fromagère. Il contient environ 50 % de l'extrait sec du lait de départ composé majoritairement de lactose et de protéines sériques, deux éléments valorisables. Sa teneur non négligeable en minéraux et en sels organiques reste toutefois un frein à sa valorisation. C'est dans ce contexte qu'un grand nombre de procédés de déminéralisation existent, combinant des procédés de filtrations membranaires, d'échanges d'ions et d'électrodialyses.

La poudre de lactosérum déminéralisé issu du lait de vache est couramment utilisée en nutrition infantile pour enrichir en protéines sériques les compositions infantiles afin d'approcher la teneur en protéines sériques du lait maternel.

Le lactosérum de petit ruminant (brebis et chèvre) est quant à lui traditionnellement utilisé en alimentation animale. Le lactosérum de petit ruminant, et en particulier le lactosérum de brebis, provient majoritairement de la technologie fromagère « pâte persillé ». Il contient au minimum 1,5 fois plus de protéines que le lactosérum issu du lait de vache.

Cette teneur importante en protéines impose des contraintes en matière de déminéralisation. En particulier, le passage sur des colonnes anioniques d'un lactosérum de petit ruminant engendrerait une perte en protéines trop importante, mais également des risques d'encrassement de ces résines. Au surplus, le coût élevé et la faible mise à disposition des protéines sériques de petits ruminants limitent la possibilité d'ajout de ces protéines à la composition déminéralisée. Par ailleurs, les lactosérums de brebis et de chèvre sont sensiblement plus riches en ions polyvalents (calcium, magnésium et phosphore) que le lactosérum de vache. Or le procédé de déminéralisation doit permettre d'assurer une déminéralisation de l'ordre de 90%, voire plus, ce qui ne pourrait pas être effectué par l'électrodialyse seule.

Le lactosérum de brebis est en outre soumis à une variabilité saisonnière. Durant la période de lactation, de novembre à juin, la teneur en protéines varie d'environ 19% à 24% sur l'extrait sec. Cette variabilité engendre également une variabilité conséquente sur le produit fini. EP0 153 967 A1 divulgue un procédé de déminéralisation de protéines de lactosérum.

Il existe enfin un besoin d'un procédé de déminéralisation susceptible de s'adapter à toute composition laitière protéique à base de lactosérum de petit ruminant (brebis/chèvre) mais également d'un mélange de lactosérum et de perméat issus de petits ruminants.

### RESUME DE L'INVENTION

Dans ce contexte, l'invention vise un procédé de déminéralisation d'une composition protéique laitière à base de lactosérum de petit ruminant assurant à la fois un rendement protéique élevé, tout en déminéralisant au moins à hauteur de 90% et ce, sans utiliser de résines anioniques.

L'invention vise optionnellement un procédé de déminéralisation permettant de s'affranchir, ou à tout le moins de limiter, la variabilité de la matière première en protéines pendant la période de lactation.

L'invention vise enfin un procédé s'adaptant à la déminéralisation d'une composition protéique laitière dont les constituants peuvent être issus de lait de brebis et/ou de chèvre.

A cet effet, le procédé de déminéralisation d'une composition protéique laitière comprenant plus de 50% en volume de lactosérum de petit ruminant de l'invention comprend au moins les étapes de :
- préparation ou fourniture de la composition protéique laitière,
- passage de la composition protéique laitière sur des résines cationiques faibles, et
- électrodialyse de la composition issue de l'étape précédente, ledit procédé étant dépourvu de toute étape de passage sur des résines anioniques.

La composition issue de l'étape d'électrodialyse est déminéralisée à plus de 85%.

Le procédé de l'invention peut également comporter les caractéristiques optionnelles suivantes considérées isolément ou selon toutes les combinaisons techniques possibles :
- les résines cationiques sont régénérées, dans l'ordre, avec une solution comprenant des ions hydroniums et une solution comprenant des ions sodium ou des ions potassium.
- les résines cationiques sont régénérées, dans l'ordre, avec de l'acide chlorhydrique et de la soude.
- le lactosérum de petit ruminant est du lactosérum de brebis.
- la composition protéique laitière est constituée de lactosérum de brebis.
- la composition protéique laitière est un mélange de lactosérum de brebis et de perméat de brebis.
- la composition protéique laitière est un mélange de lactosérum de brebis et de perméat de chèvre.
- le rapport sur l'extrait sec entre le lactosérum de brebis et le perméat de chèvre est ajusté pour l'obtention d'un mélange dont la teneur en protéines sur l'extrait sec est comprise entre 11 et 15%.
- le rapport sur l'extrait sec entre le lactosérum de brebis et le perméat de chèvre est compris entre 70:30 et 55:45.
- la composition protéique laitière subit, préalablement à l'étape de passage sur la résine cationique faible, une étape d'épuration bactérienne centrifuge.
- la composition protéique laitière déminéralisée est concentrée et séchée pour obtenir une poudre.
- le procédé de l'invention permet de fabriquer une composition déminéralisée pour laquelle la teneur en cendres en sortie de ligne de déminéralisation est inférieure à 1,5% sur l'extrait sec.

Le présent exposé porte en outre sur l'utilisation de la composition obtenue par le procédé précédemment énoncé, laquelle composition est déminéralisée à plus de 85%, pour la préparation d'un ingrédient à destination de l'alimentation infantile.

### BREVE DESCRIPTION DES FIGURES

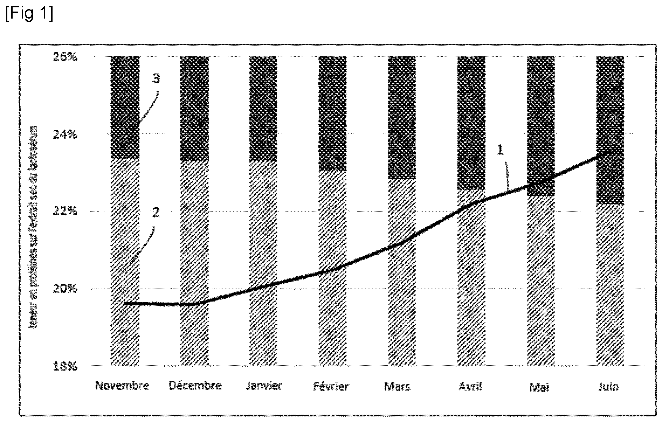

[Figure 1] D'autres caractéristiques et avantages de l'invention ressortiront à la lecture de la description qui suit, en référence à la figure unique annexée [Fig. 1] qui illustre l'évolution de la teneur en protéines sur l'extrait sec du lactosérum de brebis pendant la période de lactation, ainsi que le pourcentage sur l'extrait sec respectif de lactosérum de brebis et de perméat de chèvre dans un mélange correspondant.

### DESCRIPTION DETAILLEE

On entend par un procédé assurant une déminéralisation au moins « à hauteur de 90% » un procédé assurant une déminéralisation supérieure à 85%, et plus particulièrement supérieure à 88%.

On entend par composition protéique laitière à base de lactosérum de petit ruminant une composition comportant au moins 50% de lactosérum de petit ruminant. La composition peut être constituée de 100% de lactosérum de petit ruminant, notamment de lactosérum de brebis, ou alternativement le reste de la composition peut être un perméat de brebis ou de chèvre, pour les raisons avantageuses qui seront détaillées plus loin.

On entend par passage sur une résine cationique faible, toute installation, par exemple sous forme de colonnes bien connues de l'homme du métier, assurant un tel passage.

Le procédé de l'invention est exempt de passage sur des résines anioniques et est essentiellement caractérisé par la présence de deux étapes successives, à savoir le passage de la composition protéique laitière à traiter à base de lactosérum de petit ruminant sur des résines cationiques faibles, puis le passage de la composition issue de cette première étape sur un dispositif d'électrodialyse.

On entend par étapes successives d'une part le fait que le passage sur les résines cationiques faibles est préalable à l'étape d'électrodialyse, et d'autre part le fait que le produit issu de l'étape de passage sur les résines cationiques faibles est directement soumis à l'étape d'électrodialyse.

Il a notamment été découvert que ces deux seules étapes permettaient à la fois d'obtenir un rendement protéique efficace supérieur à 75%, voire supérieur à 85% selon la nature de la composition traitée, mais également un fort taux de déminéralisation supérieur à 85%, voire supérieur à 90% selon la nature de la composition traitée.

Le fait de réaliser un passage sur résines cationiques faibles avant l'électrodialyse permet de lisser la charge et de limiter les risques d'encrassement des membranes d'électrodialyse sans engendrer de perte substantielle en protéines. En outre, le passage sur des résines cationiques faibles permet de diminuer la teneur en ions polyvalents, et en particulier en ions divalents (calcium, magnésium) avant le passage sur l'électrodialyse.

A cet effet, il a également été découvert dans le cadre du procédé de l'invention que le type de régénération des résines cationiques permettait d'augmenter l'échange des cations bivalents avec des cations monovalents en assurant ainsi, après l'électrodialyse, un taux de déminéralisation plus important. Préférentiellement la régénération des résines cationiques est assurée d'abord par une solution comprenant des ions hydroniums pour régénérer les résines sous forme H+ et libérer les ions du mélange fixés sur les résines, puis par passage d'une solution comprenant des ions sodium ou potassium pour échanger les ions H+ avec les ions Na+ ou K+. La solution comprenant des ions hydroniums peut être de l'acide chlorhydrique à une concentration comprise entre 3 et 6% ou de l'acide sulfurique à une concentration comprise entre 0,5 et 0,8%. La solution comprenant des ions sodium ou potassium peut être de la soude à une concentration comprise entre 2 et 4% ou de la potasse à une concentration comprise entre 2 et 4%. Plus préférentiellement, la régénération des résines cationiques est réalisée par passage d'acide chlorhydrique à une concentration de 4%, puis par passage de soude à une concentration de 3%.

Avantageusement, la composition protéique laitière subit, préalablement au passage sur les résines cationiques faibles et à l'électrodialyse, des opérations de clarification, d'écrémage et d'épuration bactérienne. La clarification et l'écrémage, opérations bien connues de l'homme du métier, permettent d'éliminer les particules insolubles provenant de la fabrication fromagère et/ou de la préconcentration par évaporation, ainsi que les résidus de matières grasses. Ces différents éléments sont à limiter avec les technologies de déminéralisation pour éviter l'encrassement des résines et des membranes d'électrodialyse. L'épuration bactérienne est réalisée par centrifugation. La clarification préalable est nécessaire pour permettre d'éliminer plus de 80% des spores.

Le lactosérum de petit ruminant est préférentiellement du lactosérum de brebis issu de la fabrication fromagère des pâtes persillées à partir de lait de brebis. Le lactosérum, coproduit de la fabrication fromagère présente un pourcentage en extrait sec de 6% environ. Le lactosérum est préconcentré, par exemple par osmose inverse ou évaporation sous vide, et présente alors une teneur en extrait sec comprise entre 18 et 32%. Le lactosérum de brebis subit alors seul, ou en mélange avec les autres composants de la composition protéique laitière, une clarification, un écrémage et une épuration bactérienne. Si le lactosérum de brebis et/ou les autres composants de la composition protéique laitière ont préalablement subit une clarification et un écrémage, seule l'opération d'épuration bactérienne est réalisée sur la composition à traiter.

Selon un premier mode de réalisation (exemple 6), la composition protéique laitière est constituée de lactosérum de brebis. Le passage sur les colonnes cationiques faibles permet de réduire de plus de 80% les teneurs en calcium et magnésium. Après électrodialyse (Tableau 14), le rendement protéique moyen est d'environ 90% et le taux de déminéralisation est d'environ 90%.

Un inconvénient à l'utilisation seule de lactosérum de brebis est la variabilité de sa teneur en protéines (entre 19 et 24% sur l'extrait sec) durant la période de lactation qui induit une variation de la teneur en protéines dans le produit final. Pour pallier ce problème, le lactosérum de brebis est mélangé à un perméat de petit ruminant, brebis ou chèvre, contenant une teneur très faible en protéines. Le rapport sur l'extrait sec du lactosérum et du perméat est ajusté pendant la période de lactation pour réduire voire éliminer la variation de la teneur en protéines du mélange. Mais le perméat de brebis et de chèvre présente une forte teneur en minéraux, augmentant ainsi la charge minérale de la composition à traiter.

Un second mode de réalisation (exemples 1 à 5) consiste ainsi à mélanger du lactosérum de brebis avec du perméat de chèvre dans un rapport sur l'extrait sec variable. On obtient alors un mélange dont la teneur en protéines est comprise entre 11 et 15% sur l'extrait sec, préférentiellement entre 13 et 15%.

Le procédé de l'invention permet également, dans ce mode de réalisation, d'obtenir des résultats plus que satisfaisants en matière de rendement protéiques et de taux de déminéralisation. En effet, le passage sur les colonnes cationiques faibles permet de réduire de plus de 90% les teneurs en calcium et magnésium et après électrodialyse (Tableau 8), le rendement protéique moyen est de 79% et le taux de déminéralisation moyen est de 94%. La teneur en cendres moyenne de la composition déminéralisée est par ailleurs inférieure à 0,8% en sortie de ligne de déminéralisation.

Selon un troisième mode de réalisation (exemple 7), le lactosérum de brebis est mélangé à un perméat de brebis issu de l'ultrafiltration du lait et/ou du lactosérum de brebis, dont la teneur en extrait sec est comprise entre 15 et 20% et la teneur en protéines est comprise entre 2 et 6% sur l'extrait sec permettant ainsi à la fois de compenser la variabilité de la teneur en protéines du lactosérum de brebis, mais également de fabriquer une composition issue à 100% du lait de brebis. Pour ce mode de réalisation, le passage sur les colonnes cationiques faibles permet de réduire d'environ 90% la teneur en calcium et de plus de 75% la teneur en magnésium. Après électrodialyse (Tableau 18), le rendement protéique moyen est de 89% et le taux de déminéralisation est de 89%. La teneur en cendres moyenne de la composition déminéralisée est par ailleurs inférieure à 0,9% en sortie de ligne de déminéralisation.

Les exemples de réalisation 1 à 5 ci-dessous concernent le cas où la composition protéique laitière est un mélange de lactosérum de brebis et de perméat de chèvre. L'exemple 6 concerne le cas où la composition protéique laitière est du lactosérum de brebis pur. L'exemple 7 porte sur le cas où la composition protéique laitière est un mélange de lactosérum de brebis et de perméat de brebis.

Le procédé de l'invention tel que décrit à titre d'exemple dans les exemples ci-dessous, permet d'obtenir une composition déminéralisée à plus de 85% qui est utilisée pour la préparation d'un ingrédient à destination de l'alimentation infantile.

### Exemple 1 : Mélange de lactosérum de brebis et de perméat de chèvre - Préparation du mélange à traiter

Le lactosérum de brebis utilisé est issu majoritairement mais non exclusivement de la fabrication fromagère des pâtes persillées à partir de lait de brebis. Le lactosérum de brebis est préalablement préconcentré, par exemple par osmose inverse ou évaporation sous vide, et présente une teneur en extrait sec supérieure à 17%, généralement comprise entre 18 et 32% et une teneur en protéines sur l'extrait sec comprise entre 19,6 et 23,5%. Le lactosérum de brebis présente en outre une teneur en cendres sur l'extrait sec maximum de 8%.

Le perméat de chèvre est issu soit de lactosérum de chèvre, soit directement de lait de chèvre. Le perméat de chèvre est obtenu par ultrafiltration du lactosérum de chèvre ou du lait de chèvre. Le perméat de chèvre présente une teneur en extrait sec comprise entre 18 et 23%, une teneur en protéines sur l'extrait sec comprise entre 3,5 et 5% et une teneur en cendres sur l'extrait sec d'environ 11%, sans dépasser 14%.

Le lactosérum de brebis et le perméat de chèvre sont mélangés ensemble dans un rapport sur l'extrait sec compris entre 70:30 et 55:45 selon la période de l'année (voir exemple 2).

Le mélange subit alors des opérations en série de clarification, écrémage et épuration bactérienne en entrée desquelles le mélange présente une teneur en extrait sec maximum de 24% et au cours desquelles le mélange est maintenu à une température de 45°C.

Le mélange obtenu est prêt à être déminéralisé.

### Exemple 2 : Mélange de lactosérum de brebis et de perméat de chèvre - Evolution du mélange selon la saison

Pour pallier l'évolution de la teneur en protéines dans le lactosérum de brebis au cours de la période de lactation, le lactosérum de brebis est standardisé en protéines par mélange avec le perméat de chèvre, plus pauvre en protéines.

Le Tableau 1 ci-dessous ainsi que la figure 1 qui est l'illustration graphique du Tableau 1, montrent l'évolution de la teneur en protéines sur l'extrait sec dans le lactosérum de brebis entre novembre 2019 et juin 2020 (référence 1), ainsi que le pourcentage sur l'extrait sec de lactosérum de brebis (référence 2) et de perméat de chèvre (référence 3) dans le mélange selon la teneur en protéines du lactosérum de brebis.

**[Tableau 1] - Evolution du mélange selon la saison**

| | Nov 19 | Déc 19 | Janv 20 | Fév 20 | Mars 20 | Avr 20 | Mai 20 | Juin 20 |
|---|---|---|---|---|---|---|---|---|
| % sur l'extrait sec du perméat de chèvre dans le mélange | 33 | 34 | 34 | 37 | 40 | 43 | 45 | 48 |
| % sur l'extrait sec du lactosérum de brebis dans le mélange | 67 | 66 | 66 | 63 | 60 | 57 | 55 | 52 |
| Teneur en protéines du lactosérum de brebis (% sur ES) | 19,6 | 19,6 | 20,0 | 20,5 | 21,2 | 22,2 | 22,7 | 23,5 |
| Teneur en protéines du perméat de chèvre (% sur ES) | 3,6 | 4,2 | 4,2 | 4,4 | 4,3 | 4,4 | 4,3 | 4,5 |
| Teneur en protéines du mélange (% sur ES) | 14,4 | 14,4 | 14,6 | 14,5 | 14,4 | 14,6 | 14,4 | 14,4 |

Selon les données indiquées sur le Tableau 1, la teneur en protéines sur l'extrait sec dans le lactosérum de brebis varie entre 19,6% et 23,5%, et le rapport sur l'extrait sec entre le lactosérum de brebis et le perméat de chèvre est compris entre 67:33 et 52:48. On obtient ainsi une teneur en protéines du mélange sur l'extrait sec qui est stable et comprise entre 14 et 15% quel que soit la période de lactation.

Le mélange opéré entre le lactosérum de brebis et le perméat de chèvre induit également un mélange de leurs minéraux. Le Tableau 2 ci-dessous expose les pourcentages minimum et maximum sur extrait sec des principaux minéraux dans le lactosérum de brebis, dans le perméat de chèvre et dans le mélange.

**[Tableau 2] - Teneur en minéraux du lactosérum de brebis, du perméat de chèvre et du mélange**

| linéraux | Lactosérum de brebis (mini - maxi) | Perméat de chèvre (mini - maxi) | Mélange (mini - maxi) |
|---|---|---|---|
| Na (%ES) | 0,49% - 1,82% | 0,60% - 3,17% | 0,53% - 2,47% |
| K (%ES) | 0,52% - 2,39% | 0,89% - 4,48% | 0,64% - 3,39% |
| Ca (%ES) | 0,45% - 0,66% | 0,49% - 0,77% | 0,47% - 0,71% |
| Mg (%ES) | 0,11% - 0,18% | 0,10% - 0,29% | 0,11% - 0,23% |
| CI (%ES) | 1,21% - 3,56% | 2,88% - 5,14% | 1,76% - 4,32% |
| P (%ES) | 0,52% - 0,80% | 0,55% - 0,95% | 0,53% - 0,87% |
| Cendres (%ES) | 5,7% - 7,1% | 8,7% - 12,8% | 6,7% - 9,8% |

Le perméat de chèvre est naturellement plus minéralisé que le lactosérum de brebis. Les variations de la teneur en minéraux dans le mélange sont ainsi importantes, ce qui oblige à un procédé de déminéralisation assurant un taux de déminéralisation stable et ce, quel que soit la teneur en minéraux du mélange à traiter.

Le pourcentage sur extrait de sec de cendres est également indiqué dans le Tableau 2 et varie entre 6,7 et 9,8% dans le mélange avant déminéralisation.

### Exemple 3 : Mélange de lactosérum de brebis et de perméat de chèvre - régénération des résines cationiques faibles

Le mélange ainsi obtenu à partir des exemples 1 et 2 subit une première opération de déminéralisation par passage sur des résines cationiques faibles. On utilise pour cela des colonnes d'échanges cationiques et des résines LEWATIT^{®} S 8528 de la marque Lanxess. Différents types de régénération de ces colonnes cationiques sont testés selon cinq essais tels qu'exposés dans le Tableau 3 ci-dessous. Pour les 5 essais, la charge de production est de 1,8 kg d'extrait sec par litre, la concentration de la solution d'acide chlorhydrique est de 4% et la concentration de la solution en soude pour les essais en comportant est de 3%. Pour les essais 1 et 2, la régénération est uniquement réalisée par passage d'acide chlorhydrique pour régénérer les résines sous forme H+ et libérer les ions du mélange fixés sur les résines. Pour les essais 3 et 4, la régénération est dite mixte, en ce qu'elle est d'abord réalisée par passage d'acide chlorhydrique pour régénérer les résines sous forme H+ et libérer les ions du mélange fixés sur les résines, puis passage de NaOH pour échanger les ions H+ avec les ions Na+. Chaque régénération est exprimée en équivalent molaire par litre de résines. Pour l'essai 5, la régénération est réalisée par passage d'acide chlorhydrique puis par une standardisation à pH 7 par introduction de NaOH directement dans le mélange à traiter. Les paramètres associés à la régénération sont exprimés en équivalents molaires par litres de résines ; il s'agit d'une unité classiquement utilisée en échanges d'ions.

**[Tableau 3] - Conditions de régénérations des colonnes cationiques**

| | Régénération |
|---|---|
| Essai 1 | 2éq/L HCl |
| Essai 2 | 4éq/L HCl |
| Essai 3 | 1éq/L HCl + 1éq/L NaOH |
| Essai 4 | 2éq/L HCl + 2éq/L NaOH |
| Essai 5 | 2éq/L HCl + standardisation par NaOH à pH=7 |

Le Tableau 4 ci-dessous reporte les pourcentages de déminéralisation des ions potassium, calcium et magnésium du mélange après l'opération de passage sur résines cationiques faibles selon les essais 1 à 5.

**[Tableau 4] - Pourcentages de déminéralisation des ions potassium, calcium et magnésium après passage sur les colonnes cationiques.**

| % déminéralisation | Essai 1 | Essai 2 | Essai 3 | Essai 4 | Essai 5 |
|---|---|---|---|---|---|
| K | 33% | 41% | 56% | 83% | 40% |
| Ca | 56% | 46% | 93% | 98% | 59% |
| Mg | 32% | 36% | 82% | 98% | 27% |

On constate que les essais 3 et 4 pour lesquels la régénération des résines est mixte, permettent d'assurer une plus forte déminéralisation des ions bivalents, et en particulier des ions calcium et des magnésium contenus dans le mélange.

Cette régénération mixte est choisie dans les exemples ci-après.

### Exemple 4 : Mélange de lactosérum de brebis et de perméat de chèvre - Déminéralisation selon le procédé de l'invention

Cet exemple porte sur le procédé de déminéralisation globale du mélange de lactosérum de brebis et de perméat de chèvre obtenu à partir des exemples 1 et 2 comprenant les étapes de passage sur résines cationiques faibles suivi de l'électrodialyse.

Pour l'opération de passage sur colonnes cationiques, on utilise des colonnes d'échanges d'ions cationiques et des résines LEWATIT^{®} S 8528 de la marque Lanxess. La régénération opérée est mixte par passage d'acide chlorhydrique (4%) puis passage de soude (3%) sur les résines. La charge de production est de 1,85 kg d'extrait sec par litre de résines.

Pour l'opération d'électrodialyse, les membranes utilisées sont celles commercialisées par la société Suez sous l'appellation CR61 pour les membranes cationiques et AR103 pour les membranes anioniques. Une ligne d'électrodialyse comporte six empilements de membranes en série, chaque empilement de membranes étant monté avec 150 cellules chacune constituée d'une membrane cationique, d'une membrane anionique et de deux cadres séparateurs.

Le Tableau 5 ci-dessous indique les conditions opératoires du procédé de déminéralisation en termes de régénération des colonnes cationiques, de débit de passage sur les membranes d'électrodialyse et de conductivité en fin d'électrodialyse. Quatre essais (lots 1 à 4) sont menés selon les conditions opératoires exposées ci-dessous.

**[Tableau 5] - Conditions opératoires des colonnes cationiques faibles et de l'électrodialyse.**

| | Régénération des colonnes cationiques faibles | Conductivité en sortie d'Electrodialyse (mS/cm) |
|---|---|---|
| Lot 1 | 2éq/L HCl + 1,2éq/L NaOH | 0,3 |
| Lot 2 | 2éq/L HCl + 1éq/L NaOH | 0,3 |
| Lot 3 | 2éq/L HCl + 1éq/L NaOH | 0,3 |
| Lot 4 | 2éq/L HCl + 0,8éq/L NaOH | 0,3 |

Les Tableaux 6, 7 et 8 ci-dessous présentent les résultats obtenus respectivement après passage du mélange de lactosérum de brebis et de perméat de chèvre selon les quatre lots sur les colonnes cationiques faibles seules (Tableau 6), sur l'électrodialyse seule (Tableau 7), et sur les colonnes cationiques faibles suivies de l'électrodialyse selon le procédé de l'invention (Tableau 8). Les moyennes des résultats obtenus pour les quatre lots sont également indiquées.

Ces résultats sont d'abord présentés en termes de rendement en extrait sec et rendement protéique pour chacun des lots. Le rendement protéique est calculé à partir de l'azote total multiplié par le coefficient 6,38. Les Tableaux 6, 7 et 8 indiquent également le pourcentage de déminéralisation des principaux ions ainsi que de la matière minérale totale. Les résultats sur les ions sodium ne sont pas présentés sur le Tableau en raison de la régénération des résines avec la soude et de l'inexploitation résultante des résultats sur ces ions.

**[Tableau 6] - Résultats après passage sur les résines cationiques faibles pour les Lots 1, 2, 3 et 4 - ND : Non déterminé**

| Rendements | Lot 1 | Lot 2 | Lot 3 | Lot 4 | Moyenne |
|---|---|---|---|---|---|
| Extrait sec | 84,0% | 87,6% | 91,4% | 93,4% | 89,1% |
| Protéines | 82,2% | 79,9% | 90,4% | 82,0% | 83,6% |

| % déminéralisation | | | | | |
|---|---|---|---|---|---|
| K | 73% | 69% | 52% | 62% | 64% |
| Ca | 97% | 97% | 93% | 95% | 95% |
| Mg | 90% | 96% | 91% | 90% | 92% |
| Cl | | ND | ND | ND | ND |
| P | | ND | ND | ND | ND |
| Matière minérale totale | 25% | 30% | 26% | 31% | 28% |

**[Tableau 7] - Résultats après passage sur électrodialyse pour les Lots 1, 2 et 3**

| Rendements | Lot 1 | Lot 2 | Lot 3 | Moyenne |
|---|---|---|---|---|
| Extrait sec | 86,4% | 95,6% | 95,3% | 91,6% |
| Protéines | 90,9% | 99,2% | 92,1% | 91,5% |

| % déminéralisation | | | | |
|---|---|---|---|---|
| Na | 96% | 93% | 93% | 94% |
| K | 98% | 94% | 95% | 96% |
| Ca | 57% | 29% | 67% | 51% |
| Mg | 46% | 36% | 67% | 50% |
| Cl | 98% | 95% | 94% | 96% |
| P | 92% | 66% | 67% | 75% |
| Matière minérale totale | 91% | 94% | 93% | 93% |

**[Tableau 8] - Résultats après passage sur les résines cationiques faibles et sur l'électrodialyse pour les Lots 1, 2, 3 et 4**

| Rendements | Lot 1 | Lot 2 | Lot 3 | Lot 4 | Moyenne |
|---|---|---|---|---|---|
| Extrait sec | 72,6% | 84,0% | 81,2% | 84,5% | 80,6% |
| Protéines | 74,7% | 79,3% | 83,3% | 77,4% | 78,7% |

| % déminéralisation | | | | | |
|---|---|---|---|---|---|
| Na | 88% | 86% | 86% | 89% | 87% |
| K | 99% | 98% | 98% | 98% | 98% |
| Ca | 99% | 98% | 98% | 98% | 98% |
| Mg | 95% | 97% | 97% | 97% | 96% |
| Cl | 98% | 95% | 94% | 97% | 96% |
| P | 96% | 70% | 75% | 72% | 78% |
| Matière minérale totale | 93% | 96% | 95% | 93% | 94% |

Le Tableau 9 ci-dessous expose les teneurs en minéraux et en cendres des quatre lots après passage sur colonnes cationiques faibles et sur électrodialyse selon le procédé de l'invention.

**[Tableau 9] - Teneurs en minéraux après passage sur les résines cationiques faibles et sur l'électrodialyse pour les Lots 1, 2, 3 et 4**

| | Lot 1 | Lot 2 | Lot 3 | Lot 4 | Moyenne |
|---|---|---|---|---|---|
| Na (%ES) | 0,11% | 0,11% | 0,10% | 0,08% | 0,10% |
| K (%ES) | 0,02% | 0,06% | 0,06% | 0,05% | 0,05% |
| Ca (%ES) | 0,01% | 0,01% | 0,01% | 0,01% | 0,01% |
| Mg (%ES) | 0,01% | 0,01% | 0,01% | 0,01% | 0,01% |
| Cl (%ES) | 0,05% | 0,12% | 0,12% | 0,07% | 0,09% |
| P (%ES) | - | 0,09% | 0,11% | 0,18% | 0,13% |
| Cendres (%ES) | 0,80% | 0,60% | 0,50% | 0,70% | 0,65% |
| pH du mélange dialysé | 4,68 | 4,21 | 4,36 | 4,28 | 4,38 |
| Débit électrodialyse (tonne d'extrait sec /h) | 0,64 | 0,65 | 0,7 | - | - |

On constate que le procédé de l'invention permet d'obtenir un rendement protéique moyen de près de 80% et un taux de déminéralisation moyen de 94%, la teneur en cendres sur l'extrait sec étant égale ou inférieure à 0,8% en sortie de ligne de déminéralisation. On constate en outre que l'étape de passage sur les résines échangeuses cationiques permet d'abaisser la teneur en ions bivalents, ce que l'électrodialyse seule ne parvient pas à faire et ce, tout en conservant un rendement protéique élevé. Cette faible teneur en ions bivalents permet également d'assurer la stabilité thermique du produit final après les opérations de standardisation en pH, concentration et séchage. Cette stabilité thermique est testée sur les lots selon le protocole suivant : la poudre est ramenée à 12% d'extrait sec et est chauffée pendant 10 minutes à 90°C. On constate une absence de flocs qui atteste de la bonne stabilité du produite et ce, pour tous les lots.

### Exemple 5 : Mélange de lactosérum de brebis et de perméat de chèvre - Déminéralisation selon le procédé de l'invention au cours d'une saison de lactation

Après obtention de la composition protéique laitière déminéralisée liquide, cette composition est standardisée par ajout de soude ou de potasse. La composition est ensuite concentrée par évaporation sous vide. Sa teneur en extrait sec après concentration est d'environ 60%. La composition est alors cristallisée selon des conditions connues de l'homme du métier, puis séchée dans une tour de séchage.

Une poudre déminéralisée est ainsi obtenue.

Le Tableau 10 ci-dessous reporte les teneurs en minéraux, en cendres et en protéines dans la poudre ainsi obtenue sur une période de lactation entière de novembre 2019 à juin 2020. Ces teneurs sont exprimées en minimum, maximum et moyenne sur cette période.

**[Tableau 10] - Teneurs en minéraux, en cendres et en protéines dans la poudre**

| | minimum | moyen | maximum |
|---|---|---|---|
| pH | 6,6 | 6,8 | 7,0 |
| Na (%ES) | 0,06% | 0,12% | 0,15% |
| K (%ES) | 0,18% | 0,26% | 0,36% |
| Ca (%ES) | 0,01% | 0,02% | 0,04% |
| Mg (%ES) | 0,01% | 0,02% | 0,03% |
| Cl (%ES) | 0,03% | 0,05% | 0,10% |
| Cendres (%ES) | 0,82% | *0,97%* | 1,18% |
| Protéines (%ES) | 12,6% | 13,3% | 15,1% |

On constate que la teneur en cendres sur l'extrait sec est maintenue en dessous de 1,2% et en moyenne en dessous de 1%, la teneur en protéines variant raisonnablement entre 12,6 et 15,1% sur l'extrait sec.

### Exemple 6 : Lactosérum de brebis - Déminéralisation selon le procédé de l'invention

Dans cet exemple, la composition protéique laitière traitée est du lactosérum de brebis pur identique à celui décrit dans l'exemple 1. Comme dans l'exemple 1, le lactosérum de brebis utilisé est majoritairement issu de la fabrication fromagère des pâtes persillées à partir de lait de brebis. Il est également préalablement préconcentré, par exemple par osmose inverse ou évaporation sous vide, et présente une teneur en extrait sec supérieure à 17% et généralement comprise entre 18 et 32%, et une teneur en protéines sur l'extrait sec comprise entre 19,6 et 23,5%.

Le lactosérum de brebis subit alors des opérations de clarification et écrémage selon les conditions opératoires suivantes des opérations en série de clarification, écrémage et épuration bactérienne en entrée desquelles le mélange présente une teneur en extrait sec maximum de 24% et au cours desquelles le mélange est maintenu à une température de 45°C. Pour l'opération de passage sur colonnes cationiques, on utilise des colonnes d'échanges d'ions cationiques et des résines LEWATIT^{®} S 8528 de la marque Lanxess. La régénération opérée est mixte par passage d'acide chlorique puis passage de soude. La charge de production varie entre 1,9 et 2,9 kg d'extrait sec par litre de résines.

Pour l'opération d'électrodialyse, les membranes utilisées sont celles commercialisées par la société Suez sous l'appellation CR61 pour les membranes cationiques et AR103 pour les membranes anioniques. Une ligne d'électrodialyse comporte six empilements de membranes en série, chaque empilement de membranes étant monté avec 150 cellules chacune constituée d'une membrane cationique, d'une membrane anionique et de deux cadres séparateurs.

Le Tableau 11 ci-dessous indique les conditions opératoires du procédé de déminéralisation en termes de régénération des colonnes cationiques, de charge de production, de débit de passage sur les membranes d'électrodialyse et de conductivité en fin d'électrodialyse. Quatre essais (lots 1 à 4) sont menés selon les conditions opératoires exposées ci-dessous.

**[Tableau 11] - Conditions opératoires des colonnes cationiques faibles et de l'électrodialyse.**

| | Régénération des colonnes cationiques faibles | Charge de production | Conductivité en sortie d'Electrodialyse (mS/cm) |
|---|---|---|---|
| Lot 1 | 2éq/L HCl + 1éq/L NaOH | 2,9 kg ES/L | 0,3 |
| Lot 2 | 2éq/L HCl + 1éq/L NaOH | 2,6 kg ES/L | 0,3 |
| Lot 3 | 2éq/L HCl + 0,8éq/L NaOH | 2,2 kg ES/L | 0,3 |
| Lot 4 | 2éq/L HCl + 0,8éq/L NaOH | 1,9 kg ES/L | 0,3 |

Les Tableaux 12, 13 et 14 ci-dessous présentent les résultats obtenus respectivement après passage du lactosérum de brebis selon les quatre lots sur les colonnes cationiques faibles seules (Tableau 12), sur l'électrodialyse seule (Tableau 13), et sur les colonnes cationiques faibles suivies de l'électrodialyse selon le procédé de l'invention (Tableau 14). Les moyennes des résultats obtenus pour les quatre lots sont également indiquées.

Ces résultats sont d'abord présentés en termes de rendement en extrait sec et rendement protéique pour chacun des lots. Le rendement protéique est calculé à partir de l'azote total multiplié par le coefficient 6,38. Les Tableaux 12, 13 et 14 indiquent également le pourcentage de déminéralisation des principaux ions ainsi que de la matière minérale totale. Les résultats sur les ions sodium ne sont pas présentés en raison de la régénération des résines avec la soude et de l'inexploitation résultante des résultats sur ces ions.

**[Tableau 12] - Résultats après passage sur les résines cationiques faibles pour les Lots 1, 2, 3 et 4**

| Rendements | Lot 1 | Lot 2 | Lot 3 | Lot 4 | Moyenne |
|---|---|---|---|---|---|
| Extrait sec | 97,4% | 94,8% | 85,9% | 94,0% | 93,0% |
| Protéines | 98,1% | 96,7% | 86,4% | 93,9% | 93,8% |

| % déminéralisation | | | | | |
|---|---|---|---|---|---|
| K | 42% | 49% | 54% | 51% | 49% |
| Ca | 91% | 86% | 91% | 82% | 88% |
| Mg | 85% | 78% | 83% | 67% | 78% |
| Cl | ND | ND | ND | ND | ND |
| P | ND | ND | ND | ND | ND |
| Matière minérale totale | 21% | 23% | 32% | 20% | 24% |

**[Tableau 13] - Résultats après passage sur électrodialyse pour les Lots 1, 2, 3 et 4 ND : Données non disponibles**

| Rendements | Lot 1 | Lot 2 | Lot 3 | Lot 4 | Moyenne |
|---|---|---|---|---|---|
| Extrait sec | 87,8% | 87,8% | ND | 92,0% | 89,5% |
| Protéines | 93,6% | 93,6% | ND | 94,5% | 93,7% |

| % déminéralisation | | | | | |
|---|---|---|---|---|---|
| Na | 96% | 96% | 96% | 95% | 96% |
| K | 95% | 95% | 98% | 98% | 97% |
| Ca | 73% | 73% | 75% | 81% | 76% |
| Mg | 60% | 60% | 53% | 69% | 61% |
| Cl | 97% | 97% | 98% | 98% | 98% |
| P | 76% | 76% | 67% | 72% | 73% |
| Matière minérale totale | 89% | 89% | 81% | 90% | 87% |

**[Tableau 14] - Résultats après passage sur les résines cationiques faibles et sur l'électrodialyse pour les Lots 1, 2, 3 et 4**

| Rendements | Lot 1 | Lot 2 | Lot 3 | Lot 4 | Moyenne |
|---|---|---|---|---|---|
| Extrait sec | 85,5% | 86,8% | ND | 86,5% | 86,3% |
| Protéines | 91,9% | 88,8% | ND | 88,8% | 89,8% |

| % déminéralisation | | | | | |
|---|---|---|---|---|---|
| Na | 91% | 92% | 96% | 90% | 92% |
| K | 97% | 98% | 98% | 99% | 98% |
| Ca | 97% | 97% | 75% | 97% | 92% |
| Mg | 92% | 92% | 53% | 90% | 82% |
| Cl | 97% | 97% | 98% | 98% | 98% |
| P | 76% | 74% | 67% | 72% | 72% |
| Matière minérale totale | 91% | 90% | 81% | 92% | 89% |

| | | | | | |
|---|---|---|---|---|---|
| ND : Non déterminé | | | | | |

Le Tableau 15 ci-dessous expose les teneurs en minéraux et en cendres des quatre lots après passage sur colonnes cationiques faibles et sur électrodialyse selon le procédé de l'invention.

**[Tableau 15] - Teneurs en minéraux après passage sur les résines cationiques faibles et sur l'électrodialyse pour les Lots 1, 2, 3 et 4**

| | Lot 1 | Lot 2 | Lot 3 | Lot 4 | Moyenne |
|---|---|---|---|---|---|
| Na (%ES) | 0,06% | 0,06% | 0,05% | 0,07% | 0,06% |
| K (%ES) | 0,06% | 0,04% | 0,02% | 0,02% | 0,03% |
| Ca (%ES) | 0,02% | 0,02% | 0,02% | 0,02% | 0,02% |
| Mg (%ES) | 0,01% | 0,01% | 0,02% | 0,02% | 0,02% |
| Cl (%ES) | 0,05% | 0,04% | 0,03% | 0,03% | 0,04% |
| P (%ES) | | 0,18% | 0,22% | 0,21% | 0,20% |
| Cendres (%ES) | 0,70% | 0,80% | 1,00% | 0,70% | 0,80% |
| pH dialysé | 4,54 | 4,48 | 4,4 | 4,5 | 4,48 |
| Débit Electrodialyse (Tonne d'extrait sec/h) | 0,78 | 0,80 | 0,75 | 0,74 | 0,77 |

On constate que le procédé de l'invention permet d'obtenir un rendement protéique moyen de près de 90% et un taux de déminéralisation moyen de près de 90%, la teneur en cendres sur l'extrait sec étant égale ou inférieure à 1% en sortie de ligne de déminéralisation. Comme pour le mélange de lactosérum de brebis et de perméat de chèvre, on constate en outre que l'étape de passage sur les résines échangeuses cationiques permet d'abaisser la teneur en ions bivalents, ce que l'électrodialyse seule ne parvient pas à faire et ce, tout en conservant un rendement protéique élevé.

### Exemple 7 : Mélange de lactosérum de brebis et de perméat de brebis - Déminéralisation selon le procédé de l'invention

Dans cet exemple, la composition protéique laitière traitée est un mélange de lactosérum de brebis et de perméat de brebis. Dans cet exemple, la composition protéique laitière traitée est du lactosérum de brebis pur identique à celui décrit dans l'exemple 1. Comme dans l'exemple 1, le lactosérum de brebis utilisé est majoritairement issu de la fabrication fromagère des pâtes persillées à partir de lait de brebis. Il est également préalablement préconcentré, par exemple par osmose inverse ou évaporation sous vide, et présente une teneur en extrait sec supérieure à 17% et généralement comprise entre 18 et 32%, et une teneur en protéines sur l'extrait sec comprise entre 19,6 et 23,5%.

Le perméat de brebis est issu de lait et/ou de lactosérum de brebis qui a subi une étape d'ultrafiltration. Sa teneur en extrait sec est de 17,2% et sa teneur en protéines est de 3,6% sur l'extrait sec.

Le lactosérum de brebis et le perméat de chèvre sont mélangés ensemble dans un rapport sur l'extrait sec de 64:36.

Le mélange subit alors des opérations en série de clarification, écrémage et épuration bactérienne en entrée desquelles le mélange présente une teneur en extrait sec maximum de 24% et au cours desquelles le mélange est maintenu à une température de 45°C. Le mélange obtenu est prêt à être déminéralisé.

Le Tableau 16 ci-dessous reporte les pourcentages sur extrait sec des principaux minéraux contenus dans le lactosérum de brebis, le perméat de brebis et un mélange de lactosérum de brebis et de perméat de brebis dans un rapport sur l'extrait sec de 64:36 selon cet exemple. On notera que pour le calcium et le magnésium, les pourcentages sur extrait sec du mélange sont sensiblement inférieurs aux valeurs correspondantes dans le lactosérum de brebis et dans le perméat de brebis, certainement en raison de la précision de l'analyse, mais également de l'étape de clarification qui pourrait avoir enlevé des minéraux précipités. Le tableau 17 reporte les pourcentages minimum et maximum pouvant être attendus selon la saison et entrant dans le cadre de ce mode de réalisation.

**[Tableau 16] - Teneurs en minéraux du lactosérum de brebis, du perméat de brebis et du mélange.**

| Minéraux | Lactosérum de brebis | Perméat de brebis | Mélange (écrémé) |
|---|---|---|---|
| Na (%ES) | 0,68% | 0,62% | 0,65% |
| K (%ES) | 1,85% | 1,53% | 1,61% |
| Ca (%ES) | 0,53% | 0,56% | 0,48% |
| Mg (%ES) | 0,17% | 0,17% | 0,16% |
| Cl (%ES) | 1,32% | 1,36% | 1,35% |
| P (%ES) | ND | 0,71% | 0,61% |
| Cendres (%ES) | 6,7% | 6,9% | 6,9% |

**[Tableau 17] - Teneurs minimum et maximum en minéraux du lactosérum de brebis, du perméat de brebis et du mélange.**

| Minéraux | Lactosérum de brebis (mini - maxi) | Perméat de brebis (mini - maxi) | Mélange (mini - maxi) |
|---|---|---|---|
| Na (%ES) | 0,49% - 1,82% | 0,50% - 1,00% | 0,49% - 1,43% |
| K (%ES) | 0,52% - 2,39% | 1,00% - 2,00% | 0,68% - 2,20% |
| Ca (%ES) | 0,45% - 0,66% | 0,50% - 0,60% | 0,47% - 0,63% |
| Mg (%ES) | 0,11% - 0,18% | 0,14% - 0,19% | 0,12% - 0,19% |
| Cl (%ES) | 1,21% - 3,56% | 1,20% - 2,00% | 1,20% - 2,81% |
| P (%ES) | 0,52% - 0,80% | 0,60% - 0,80% | 0,55% - 0,80% |
| Cendres (%ES) | 5,7% - 7,1% | 6,5% - 8,5% | 6,0% - 7,8% |

Pour l'opération de passage sur colonnes cationiques, on utilise, comme pour les exemples précédents, des colonnes d'échanges d'ions cationiques et des résines LEWATIT^{®} S 8528 de la marque Lanxess. La régénération opérée est mixte par passage d'acide chlorique puis passage de soude. La charge de production varie entre 1,6 et 1,8 kg d'extrait sec par litre de résines.

Pour l'opération d'électrodialyse, les membranes utilisées sont celles commercialisées par la société Suez sous l'appellation CR61 pour les membranes cationiques et AR103 pour les membranes anioniques. Une ligne d'électrodialyse comporte six empilements de membranes en série, chaque empilement de membranes étant monté avec 150 cellules chacune constituée d'une membrane cationique, d'une membrane anionique et de deux cadres séparateurs.

Les essais sont réalisés sur un lot. La régénération des colonnes cationiques faibles est réalisée par passage d'acide chlorhydrique (4%) à raison de deux équivalents molaires par litre de résines et puis passage de soude (3%) à raison de 0,8 équivalent molaire par litre de résines. La charge de production est comprise entre 1,6 et 1,8 kilogrammes d'extrait sec par litre de résines pour une conductivité en fin d'électrodialyse de 0,3 millisiemens.

Le tableau 18 ci-dessous présente les résultats obtenus respectivement après passage du mélange sur les colonnes cationiques faibles seules, sur l'électrodialyse seule, et sur les colonnes cationiques faibles suivies de l'électrodialyse selon le procédé de l'invention.

Ces résultats sont d'abord présentés en termes de rendement en extrait sec et rendement protéique. Le rendement protéique est calculé à partir de l'azote total multiplié par le coefficient 6,38. Le tableaux 18 indique également le pourcentage de déminéralisation des principaux ions ainsi que de la matière minérale totale. Les résultats sur les ions sodium ne sont pas présentés en raison de la régénération des résines avec la soude et de l'inexploitation résultante des résultats sur ces ions.

**[Tableau 18] : Résultats après passage sur les résines cationiques faibles, sur électrodialyse et sur les résines cationiques faibles et sur l'électrodialyse.**

| Rendements | Résines cationiques faibles | Electrodialyses | Déminéralisation globale |
|---|---|---|---|
| Extrait sec | 91% | 95% | 86% |
| Protéines | 90% | 99% | 89% |

| % déminé | | | |
|---|---|---|---|
| Na | ND | 95% | 90% |
| K | 59% | 97% | 99% |
| Ca | 89% | 71% | 97% |
| Mg | 76% | 44% | 86% |
| Cl | ND | 99% | 99% |
| P | ND | 73% | 73% |
| Matière minérale totale | 25% | 86% | 89% |

| | | | |
|---|---|---|---|
| ND : Non déterminé | | | |

Le Tableau 19 ci-dessous expose les teneurs en minéraux et en cendres du mélange après passage sur colonnes cationiques faibles et sur électrodialyse selon le procédé de l'invention.

**[Tableau 19] - Teneurs en minéraux après passage sur les résines cationiques faibles et sur l'électrodialyse**

| | |
|---|---|
| Na (%ES) | 0,08% |
| K (%ES) | 0,02% |
| Ca (%ES) | 0,02% |
| Mg (%ES) | 0,02% |
| Cl (%ES) | 0,02% |
| P (%ES) | 0,19% |
| Cendres (%ES) | 0,88% |
| pH dialysé ? | 4,4 |
| débit d'électrodialyse (Tonne par heure) | 0,65 |

On constate que le procédé de l'invention permet d'obtenir un rendement protéique moyen de près de 90% et un taux de déminéralisation moyen de près de 90%, la teneur en cendres sur l'extrait sec étant inférieure à 0,9% en sortie de ligne de déminéralisation. Comme pour le mélange de lactosérum de brebis et de perméat de chèvre, on constate en outre que l'étape de passage sur les résines échangeuses cationiques permet d'abaisser la teneur en ions bivalents, ce que l'électrodialyse seule ne parvient pas à faire et ce, tout en conservant un rendement protéique élevé.

## Revendications

1. Procédé de déminéralisation d'une composition protéique laitière comprenant plus de 50% en volume de lactosérum de petit ruminant, lequel procédé comprend au moins les étapes de :
- préparation ou fourniture de la composition protéique laitière,
- passage de la composition protéique laitière sur des résines cationiques faibles, et
- électrodialyse de la composition issue de l'étape précédente,
ledit procédé étant dépourvu de toute étape de passage sur des résines anioniques.

2. Procédé selon la revendication 1, **caractérisé en ce que** les résines cationiques sont régénérées, dans l'ordre, avec une solution comprenant des ions hydroniums et une solution comprenant des ions sodium ou des ions potassium.

3. Procédé selon la revendication précédente, **caractérisé en ce que** les résines cationiques sont régénérées, dans l'ordre, avec de l'acide chlorhydrique et de la soude.

4. Procédé selon l'une quelconque des revendications 1 à 3, **caractérisé en ce que** le lactosérum de petit ruminant est du lactosérum de brebis.

5. Procédé selon la revendication 4, **caractérisé en ce que** la composition protéique laitière est constituée de lactosérum de brebis.

6. Procédé selon la revendication 4, **caractérisé en ce que** la composition protéique laitière est un mélange de lactosérum de brebis et de perméat de brebis.

7. Procédé selon la revendication 4, **caractérisé en ce que** la composition protéique laitière est un mélange de lactosérum de brebis et de perméat de chèvre.

8. Procédé selon la revendication 7, **caractérisé en ce que** le rapport sur l'extrait sec entre le lactosérum de brebis et le perméat de chèvre est ajusté pour l'obtention d'un mélange dont la teneur en protéines sur l'extrait sec est comprise entre 11 et 15%.

9. Procédé selon l'une quelconque des revendications 7 et 8, **caractérisé en ce que** le rapport sur l'extrait sec entre le lactosérum de brebis et le perméat de chèvre est compris entre 70:30 et 55:45.

10. Procédé selon l'une quelconque des revendications précédentes, **caractérisé en ce que** la composition protéique laitière subit, préalablement à l'étape de passage sur la résine cationique faible, une étape d'épuration bactérienne centrifuge.

11. Procédé selon l'une quelconque des revendications précédentes, **caractérisé en ce qu'**après l'étape d'électrodialyse, la composition protéique laitière déminéralisée est concentrée et séchée pour obtenir une poudre.

## Patentansprüche

1. Verfahren zur Entmineralisierung einer Milchproteinzusammensetzung, die mehr als 50 Vol.-% Molke von kleinen Wiederkäuern enthält, wobei das Verfahren mindestens die folgenden Schritte umfasst:
- Herstellung oder Bereitstellung der Milchproteinzusammensetzung,
- Durchleiten der Milchproteinzusammensetzung durch schwach kationische Harze und
- Elektrodialyse der aus dem vorhergehenden Schritt stammenden Zusammensetzung,
wobei das Verfahren keinen Schritt des Durchleitens durch anionische Harze umfasst.

2. Verfahren nach Anspruch 1, **dadurch gekennzeichnet, dass** die kationischen Harze nacheinander mit einer Lösung, die Hydroniumionen enthält, und einer Lösung, die Natrium- oder Kaliumionen enthält, regeneriert werden.

3. Verfahren nach dem vorstehenden Anspruch, **dadurch gekennzeichnet, dass** die kationischen Harze nacheinander mit Salzsäure und Natronlauge regeneriert werden.

4. Verfahren nach einem der Ansprüche 1 bis 3, **dadurch gekennzeichnet, dass** es sich bei der Molke von kleinen Wiederkäuern um Schafsmolke handelt.

5. Verfahren nach Anspruch 4, **dadurch gekennzeichnet, dass** die Milchproteinzusammensetzung aus Schafsmolke besteht.

6. Verfahren nach Anspruch 4, **dadurch gekennzeichnet, dass** die Milchproteinzusammensetzung eine Mischung aus Schafsmolke und Schafspermeat ist.

7. Verfahren nach Anspruch 4, **dadurch gekennzeichnet, dass** die Milchproteinzusammensetzung eine Mischung aus Schafsmolke und Ziegenpermeat ist.

8. Verfahren nach Anspruch 7, **dadurch gekennzeichnet, dass** das Verhältnis auf Trockenmasse zwischen der Schafsmolke und dem Ziegenpermeat so eingestellt wird, dass eine Mischung erhalten wird, deren Proteingehalt auf Trockenmasse zwischen 11 und 15 % liegt.

9. Verfahren nach einem der Ansprüche 7 und 8, **dadurch gekennzeichnet, dass** das Verhältnis von Schafsmolke zu Ziegenpermeat, bezogen auf die Trockenmasse, zwischen 70:30 und 55:45 liegt.

10. Verfahren nach einem der vorstehenden Ansprüche, **dadurch gekennzeichnet, dass** die Milchproteinmischung vor dem Durchlauf durch das schwach kationische Harz einem zentrifugalen bakteriellen Reinigungsschritt unterzogen wird.

11. Verfahren nach einem der vorstehenden Ansprüche, **dadurch gekennzeichnet, dass** nach dem Elektrodialyseschritt die entmineralisierte Milchproteinzusammensetzung konzentriert und getrocknet wird, um ein Pulver zu erhalten.

## Claims

1. A method for demineralising a milk protein composition comprising more than 50 per cent by volume of small ruminant whey, which method comprises at least the steps of:
- preparing or providing the milk protein composition,
- passing the milk protein composition over weak cation exchange resins, and
- electrodialysing the composition resulting from the previous step,
said process not comprising any step of passing the composition over anionic resins.

2. A process according to claim 1, wherein the cationic resins are regenerated, in sequence, with a solution comprising hydronium ions and a solution comprising sodium ions or potassium ions.

3. A process according to the preceding claim, wherein the cationic resins are regenerated, in sequence, with hydrochloric acid and caustic soda.

4. A method according to any one of claims 1 to 3, wherein the small ruminant whey is sheep's whey.

5. A method according to claim 4, wherein the milk protein composition consists of sheep whey.

6. A method according to claim 4, wherein the milk protein composition is a mixture of sheep whey and sheep permeate.

7. A method according to claim 4, wherein the milk protein composition is a mixture of sheep whey and goat permeate.

8. A method according to claim 7, wherein the ratio, on a dry matter basis, of sheep whey to goat permeate is adjusted to obtain a mixture having a protein content, on a dry matter basis, of between 11 and 15 per cent.

9. A method according to any one of claims 7 and 8, wherein the dry matter ratio between sheep whey and goat permeate is between 70:30 and 55:45.

10. A method according to any one of the preceding claims, wherein the milk protein composition undergoes a centrifugal bacterial purification step prior to the step of passing it over the weak cation exchange resin.

11. A method according to any one of the preceding claims, wherein after the electrodialysis stage, the demineralised milk protein composition is concentrated and dried to obtain a powder.
